Europäisches Patentamt

European Patent Office

Office européen des brevets

(19)

(11) **EP 1 424 796 A1**

(12) **EUROPEAN PATENT APPLICATION**

(43) Date of publication:
**02.06.2004 Bulletin 2004/23**

(51) Int Cl.$^7$: **H04B 17/00**, H04B 7/005

(21) Application number: **02425741.2**

(22) Date of filing: **29.11.2002**

| (84) Designated Contracting States:<br>**AT BE BG CH CY CZ DE DK EE ES FI FR GB GR<br>IE IT LI LU MC NL PT SE SK TR**<br>Designated Extension States:<br>**AL LT LV MK RO SI**<br><br>(71) Applicant: **Siemens Mobile Communications<br>S.p.A.<br>20126 Milano (IT)** | (72) Inventors:<br>• **Marnoni, Luca<br>21047 Saronno (VA) (IT)**<br>• **Ventura, Alessandro<br>20158 Mailand (IT)** |

(54) **A method for detecting bursts in a telecommunication system**

(57)     A method for detecting transmitted bursts in a telecommunication system wherein data blocks are transmitted in bursts and training sequences are transmitted in association with said data blocks, operation of the system being affected by signal impairment sources. The method includes the steps of:

- determining a first power level parameter ($P_u$) indicative of the power associated to a received training sequence,
- determining a second power level parameter indicative of power associated to the impairment sources ($P_n$),

- combining the first ($P_u$) and second ($P_n$) power level parameters to generate a combined power parameter ($\alpha$),
- defining at least one threshold value ($\alpha_{max}$) for the combined power parameter ($\alpha$),
- comparing the combined power parameter ($\alpha$) against the threshold value ($\alpha_{max}$) to obtain either of a first and a second comparison result, whereby transmitted bursts are detected in the case of said first comparison result ($\alpha < \alpha_{max}$) and no transmitted bursts are detected in the case of said second comparison result ($\alpha > \alpha_{max}$).

$$\left\{ m^I \right\} = \left( m_1^I, m_2^I, \ldots, m_{144}^I \right) \qquad \left\{ y \right\} = \left( y_1, y_2, \ldots, y_{144} \right)$$

$$\left\{ n \right\} = \left( n_1, n_2, \ldots, n_{144} \right)$$

$$m_i^I = m_i^{IR} + j m_i^{II}$$
$$n_i = n_i^R + j n_i^I$$
$$y_i = m_i^I + n_i = m_i^{IR} + n_i^R + j\left( m_i^{II} + n_i^I \right)$$

FIG 1

EP 1 424 796 A1

**Description**

Field of the Invention

The present invention relates to techniques for detecting transmitted bursts in digital telecommunication system. The invention was developed by paying specific attention to the possible use in digital telecommunication systems using a time division access technique, where data blocks are transmitted in bursts and training sequences are transmitted in association to said data blocks and received at the receiver side.

Discontinuous transmission (DTX) techniques, leading to transmission being discontinued when no useful information has to be sent, are widely used in telecommunication systems such as cellular digital systems in order to reduce on air interference and to save battery power.

In most systems, before discontinuing transmission, a special burst is transmitted signalling the start of a "silent" period that is the period where no user information has to be sent. Transmission is then resumed as soon as meaningful data has to be sent. This particular behaviour forces the receiver to check every burst during silent periods in order to detect whether the transmission is resumed or not.

Background Art

It is known to perform this check operation by exploiting the parity bits used in the channel coding: if the parity check is verified, the frame is considered valid and transmission is resumed; otherwise the silent period continues. The error rate of this detection scheme is equal to $2^{-p}$, where p is the number of parity bits. For usual values of p, the resulting error rate is quite high. For instance in TD-SCDMA (Time Division-Synchronous Code Division Multiple Access) speech channels the value of p is 8, resulting in an error rate of 1/256 (in GSM speech channels p ranges from 3 to 6).

Moreover, the use of the parity check method alone necessitates that the receiver is always in reception, thus resulting in further power consumption.

Object of the Invention

The object of the present invention is thus to overcome the drawbacks inherent to the prior art solutions considered in the foregoing.

Summary of the Invention

According to the present invention, such an object is achieved by means of the method having the features called for in the claims that follow, these claims forming an integral part of the description herein. The invention also relates to a corresponding receiver as well as a computer program product directly loadable into the memory of a digital computer and comprising software code portions for performing the steps of the method of the invention when said product is run on a computer.

A typical embodiment of the present invention provides a method for detecting a silent period in a receiver for cellular digital telecommunications system. A preferred embodiment of the invention is a method for detecting a silent period, thus allowing for suspension of reception, in a receiver for cellular digital telecommunications system. The presently preferred embodiments of the invention are intended for use in digital communication systems making use of a time division access technique where a training sequence is present in the time slot burst format, thus permitting the power measurement of the received training sequence to be compared with a noise estimate.

Brief description of the Drawings

Further objects, features and advantages of the present invention will become apparent from the following detailed description and annexed drawings, which are supplied by way of non limiting example, wherein:

- figure 1 shows a basic diagram of signals used in the method according to the invention;
- figure 2 shows a basic diagram of rejected valid frames error rate according to the invention;
- figure 3 show accepted invalid frames error rate;
- figure 4 and figure 5 show the same analysis are performed at σ = 1, 2 and 3 (C/I = 0, -6 and -9.5 dB) in very noisy channel conditions;
- figure 6 and figure 7 show rejected valid frames error rate exploiting N bursts in the power estimate (orthogonal midambles, C/I = -6 dB) and accepted invalid frames error rate exploiting N bursts in the power estimate (orthogonal midambles, C/I = -6 dB).

<u>Detailed description of a preferred embodiment of the Invention</u>

In the preferred context of application of the solution described herein, transmission of a data block usually requires more than one burst, whereby all of them are useful in the training sequence power and noise estimate. For instance, in TD-SCDMA systems a speech data block is transmitted in 40 ms exploiting the same radio resource (a speech burst in a time slot) in 8 subsequent radio frames (see the standards TSM 05.03 Channel Coding and 3GPP TS 25.222 Multiplexing and channel coding (TDD)).

The captioned standards are well known to the persons skilled in the art, thus making it unnecessary to provide herein a detailed description of the corresponding methods and systems. Consequently, only those specific characteristics and features that are of momentum for understanding and practising the exemplary embodiment of the invention considered herein will be described in detail in the following.

In the systems in question the possibility exists of detecting if a given received signal contains the training sequence associated with the expected transmitted burst.

Let $P_u$ denote the detected training sequence power associated to data blocks, and $P_n$ the noise and interference power level (i.e. the power level associated to the impairment sources) affecting operation of the transmission channel.

A combined, "silence" parameter can be obtained by combining the two power levels $P_u$ and $P_n$ e.g. in the form:

$$\alpha = \frac{P_n}{P_u} \tag{1}$$

that is as the ratio between them.

If $\alpha_{max}$ is a threshold value for $\alpha$, it may be generally assumed that in a receiver for cellular digital telecommunications systems a silent period can be detected under the assumption that all burst received with $\alpha > \alpha_{max}$ are considered as noise, while those with $\alpha < \alpha_{max}$ are considered as transmitted bursts.

The threshold value $\alpha_{max}$ is chosen in order to minimize the error rate of the method.

Indeed, two possible errors exist:

- a transmitted burst is actually received with $\alpha > \alpha_{max}$ (which leads to the transmitted bursts being erroneously rejected);
- the received signal is such as $\alpha < \alpha_{max}$ although no burst has been transmitted (the received signal is thus erroneously interpreted as a valid burst while in fact constituted by interference and noise only).

High values of the threshold value $\alpha_{max}$ (i.e. close to 1) greatly reduce errors due to the first condition, but increase errors related to the second condition. The opposite happens for low values of the threshold value $\alpha_{max}$ (i.e. close to 0).

Thus an optimum value for the threshold value in question has to be chosen in order to minimize the overall error probability.

The estimate of the detected training sequence power $P_u$ can be performed by means of the burst training sequence. Conversely, for evaluating the noise and interference power $P_n$ a sequence as much as orthogonal to the training one is required.

After that choice, the evaluation of detected training sequence power $P_u$ and noise and interference power $P_n$ can be performed in several ways.

Some examples are:

- correlation of the received signal with the detected training sequence power $P_u$ and noise and interference power $P_n$;
- use of rake receiver techniques exploiting the detected training sequence power $P_u$ and noise and interference power $P_n$;
- use of joint detection techniques exploiting detected training sequence power $P_u$ and noise and interference power $P_n$.

In TD-SCDMA systems the training sequence is transmitted together with the information within every time slot and corresponds to a cyclic rotation of a basic midamble code. Each cell is associated to one basic midamble code, used both for downlink and uplink burst transmissions, selected among the set of 128 basic midamble codes defined in the standard (see TSM 05.02 Multiplexing and multiple access on the radio path and 3GPP TS 25.221 Physical channels and mapping of transport channels onto physical channels (TDD)).

For each basic midamble at least an orthogonal midamble exists that can be chosen as the sequence exploited to evaluate the noise power.

A complete list of orthogonal midambles is provided in Table 1 hereinafter.

Table 1

| Mid# | Orthogonal Midambles |
|---|---|
| 1 | 4, 16, 51, 53, 56, 57, 60, 74, 87, 92, 100, 109, 126 |
| 2 | 8, 31, 39, 44, 89, 124 |
| 3 | 16, 95, 126 |
| 4 | 1, 8, 14, 37, 62, 92 |
| 5 | 51, 56, 58, 106 |
| 6 | 15, 66, 71, 77, 99 |
| 7 | 33, 36, 40, 48, 127 |
| 8 | 2, 4, 42, 70, 74, 100 |
| 9 | 37, 45, 58, 74, 81, 101, 107, 120, 125 |
| 10 | 19, 33, 34, 49, 66, 110, 118 |
| 11 | 20, 27, 45, 60, 117 |
| 12 | 72, 83, 86, 96 |
| 13 | 18, 43, 49, 77, 83, 84, 86, 93, 108, 121 |
| 14 | 4, 16, 37, 44, 56, 57, 69, 105, 111, 124 |
| 15 | 6, 36, 61, 66, 90, 112 |
| 16 | 1, 3, 14, 62, 100, 111, 120 |
| 17 | 52, 55, 72, 79, 108, 115 |
| 18 | 13, 30, 40, 63, 71, 79, 112 |
| 19 | 10, 38, 65, 66, 80, 96, 98 |
| 20 | 11, 45, 54, 56, 101, 106, 111, 116 |
| 21 | 29, 49, 52, 85, 113, 119 |
| 22 | 59, 96, 97, 115, 123 |
| 23 | 34, 55, 65, 66, 73, 98, 113, 121 |
| 24 | 26, 107, 111 |
| 25 | 47, 53, 81, 89, 100, 102, 116, 122, 128 |
| 26 | 24, 42, 101, 109, 124 |
| 27 | 11, 107, 111 |
| 28 | 30, 43, 71, 75, 93, 96 |
| 29 | 21, 68, 71, 86, 94, 115, 118 |
| 30 | 18, 28, 65, 66, 79, 85, 91, 93, 108, 115 |
| 31 | 2, 58, 81, 87, 95 |
| 32 | 43, 76, 80, 93, 110, 113, 114, 115 |
| 33 | 7, 10, 34, 52, 76, 79, 84, 85, 86, 94, 108 |
| 34 | 10, 23, 33, 43, 71, 75, 79, 80, 84, 85, 90, 98, 99, 103, 108, 118, 123 |

Table 1   (continued)

| Mid# | Orthogonal Midambles |
|------|---------------------|
| 35 | 44, 53, 92, 106, 117 |
| 36 | 7, 15, 38, 48, 67, 96, 99, 104, 119 |
| 37 | 4, 9, 14, 46, 70, 81, 107 |
| 38 | 19, 36, 68, 73, 76, 94 |
| 39 | 2, 81, 92 |
| 40 | 7, 18, 66, 77, 84, 93, 97, 113 |
| 41 | 61, 65, 73, 90, 94, 104, 115 |
| 42 | 8, 26, 45, 53, 54, 105 |
| 43 | 13, 28, 32, 34, 65, 71, 79, 90, 98, 121 |
| 44 | 2, 14, 35, 70, 87, 106, 122 |
| 45 | 9, 11, 20, 42, 56, 101, 105, 109 |
| 46 | 37, 50, 87, 102, 106 |
| 47 | 25, 57, 69, 107, 122, 126 |
| 48 | 7, 36 |
| 49 | 10, 13, 21, 67, 73, 75, 79, 108, 119 |
| 50 | 46, 56, 82, 101, 128 |
| 51 | 1, 5, 54, 58, 62, 81, 87, 89, 102, 109 |
| 52 | 17, 21, 33, 65, 79, 99 |
| 53 | 1, 25, 35, 42, 54, 56, 82, 107, 109 |
| 54 | 20, 42, 51, 53, 56, 64, 69, 74, 82, 111, 124 |
| 55 | 17, 23, 63, 84, 98 |
| 56 | 1, 5, 14, 20, 45, 50, 53, 54, 100, 102, 107, 111, 116, 117, 122, 128 |
| 57 | 1, 14, 47, 62, 87, 105 |
| 58 | 5, 9, 31, 51 |
| 59 | 22, 73, 94, 103 |
| 60 | 1, 11, 64, 87, 105, 111, 128 |
| 61 | 15, 41, 83, 108, 110, 113 |
| 62 | 4, 16, 51, 57, 82, 117, 120, 124 |
| 63 | 18, 55, 72, 77, 84, 93, 103, 112 |
| 64 | 54, 60 |
| 65 | 19, 23, 30, 41, 43, 52, 66, 67, 86, 91, 118, 119 |
| 66 | 6, 10, 15, 19, 23, 30, 40, 65, 112 |
| 67 | 36, 49, 65, 76, 84, 90 |
| 68 | 29, 38 |
| 69 | 14, 47, 54, 100, 106, 116, 117, 128 |
| 70 | 8, 37, 44, 102, 105 |
| 71 | 6, 18, 28, 29, 34, 43, 96, 97 |
| 72 | 12, 17, 63, 76, 77, 83, 90, 96, 119, 121 |

Table 1   (continued)

| Mid# | Orthogonal Midambles |
|---|---|
| 73 | 23, 38, 41, 49, 59, 96, 98, 114 |
| 74 | 1, 8, 9, 54, 88, 92, 106, 107, 120, 125 |
| 75 | 28, 34, 49, 98, 119 |
| 76 | 32, 33, 38, 67, 72, 77, 79, 84, 86, 90, 91, 103, 115, 121 |
| 77 | 6, 13, 40, 63, 72, 76, 78, 83, 86, 110 |
| 78 | 77, 113, 115 |
| 79 | 17, 18, 30, 33, 34, 43, 49, 52, 76, 83, 112, 121 |
| 80 | 19, 32, 34, 86, 93 |
| 81 | 9, 25, 31, 37, 39, 51, 88, 109, 111, 128 |
| 82 | 50, 53, 54, 62, 109, 124 |
| 83 | 12, 13, 61, 72, 77, 79, 110, 121 |
| 84 | 13, 33, 34, 40, 55, 63, 67, 76 |
| 85 | 21, 30, 33, 34, 113, 114, 127 |
| 86 | 12, 13, 29, 33, 65, 76, 77, 80, 91, 96, 115 |
| 87 | 1, 31, 44, 46, 51, 57, 60, 88, 102 |
| 88 | 74, 81, 87, 116, 122 |
| 89 | 2, 25, 51, 116 |
| 90 | 15, 34, 41, 43, 67, 72, 76, 108, 113 |
| 91 | 30, 65, 76, 86 |
| 92 | 1, 4, 35, 39, 74, 111, 125, 128 |
| 93 | 13, 28, 30, 32, 40, 63, 80 |
| 94 | 29, 33, 38, 41, 59 |
| 95 | 3, 31, 125, 126 |
| 96 | 12, 19, 22, 28, 36, 71, 72, 73, 86, 110 |
| 97 | 22, 40, 71 |
| 98 | 19, 23, 34, 43, 55, 73, 75, 119 |
| 99 | 6, 34, 36, 52, 113 |
| 100 | 1, 8, 16, 25, 56, 69, 102, 116, 122, 125 |
| 101 | 9, 20, 26, 45, 50, 124 |
| 102 | 25, 46, 51, 56, 70, 87, 100, 107 |
| 103 | 34, 59, 63, 76 |
| 104 | 36, 41, 110 |
| 105 | 14, 42, 45, 57, 60, 70, 109, 126 |
| 106 | 5, 20, 35, 44, 46, 69, 74, 128 |
| 107 | 9, 24, 27, 37, 47, 53, 56, 74, 102, 128 |
| 108 | 13, 17, 30, 33, 34, 49, 61, 90 |
| 109 | 1, 26, 45, 51, 53, 81, 82, 105, 111, 117, 120 |
| 110 | 10, 32, 61, 77, 83, 96, 104, 115 |

Table 1 (continued)

| Mid# | Orthogonal Midambles |
|------|----------------------|
| 111 | 14, 16, 20, 24, 27, 54, 56, 60, 81, 92, 109, 120 |
| 112 | 15, 18, 63, 66, 79 |
| 113 | 21, 23, 32, 40, 61, 78, 85, 90, 99 |
| 114 | 32, 73, 85, 119 |
| 115 | 17, 22, 29, 30, 32, 41, 76, 78, 86, 110, 119 |
| 116 | 20, 25, 56, 69, 88, 89, 100, 124, 128 |
| 117 | 11, 35, 56, 62, 69, 109 |
| 118 | 10, 29, 34, 65, 127 |
| 119 | 21, 36, 49, 65, 72, 75, 98, 114, 115 |
| 120 | 9, 16, 62, 74, 109, 111, 126 |
| 121 | 13, 23, 43, 72, 76, 79, 83 |
| 122 | 25, 44, 47, 56, 88, 100 |
| 123 | 22, 34 |
| 124 | 2, 14, 26, 54, 62, 82, 101, 116 |
| 125 | 9, 74, 92, 95, 100, 128 |
| 126 | 1, 3, 47, 95, 105, 120 |
| 127 | 7, 85, 118 |
| 128 | 25, 50, 56, 60, 69, 81, 92, 106, 107, 116, 125 |

To keep the orthogonal property the same cyclic rotation must be applied to both basic midambles. This may occur according to the rule provided in TSM 05.02 and 3GPP TS 25.221.

The application of the solution exemplified herein to the detection of silent periods in discontinuous transmission (DTX) without discontinuous reception (DRX) will now be described. Discontinuous reception is used together with discontinuous transmission to suspend the reception when the transmission is halted.

As indicated in the foregoing, in DTX techniques - before halting the transmission - a special burst is transmitted signalling the start of a silent period. As soon as new information is available, a corresponding data block is transmitted using the corresponding transport channel. Thus, during a silent period the receiver side must check the received bursts in order to detect if the transmission has been resumed.

The use of the DTX techniques without DRX allows the continuous reception of the signal, so at the receiver side it is possible to exploit all burst regarding the same data block.

If B denotes the number of bursts used in the transmission of a data block, the relation (1) introduced in the foregoing is modified to define the combined "silence" parameter $\alpha$ as:

$$\alpha = \frac{\sum_{i=1}^{B} P_n^i}{\sum_{i=1}^{B} P_u^i} \qquad (2)$$

where $P_n^i$ and $P_u^i$ denote the noise and interference power and the "useful" power, respectively, over the i-th burst.

The power estimate over a larger set of bursts, that are "all or none" transmitted, increases the reliability of the parameter $\alpha$ by reducing the error rate of the method.

The optimization of the threshold value $\alpha_{max}$ must take into account the value of B: as B becomes larger, smaller values for the threshold value $\alpha_{max}$ are allowed.

A special case in the selection of B occurs when the transport channel over which transmission takes place adopts a "diagonal" interleaving scheme. Diagonal interleaving forces a burst to carry the information of two subsequent data block and is, obviously, transmitted even when only one data block has to be sent. Therefore, to avoid errors, the number B of bursts is set at the value equal to the half number of burst exploited in the transmission of a data block.

Now, the application of the solution exemplified herein to the detection in DTX silent periods -- with -- DRX will be described.

As indicated, DRX is used together with DTX to suspend reception when the transmission is discontinued.

The duration of a silent period, however, is not known *a priori*, which forces the receiver to check whether a data block is transmitted or not. Thus the use of DRX is possible only when a data block is transmitted exploiting B bursts with B larger than one. In this case, a number N of bursts ($1 \leq N < B$) is chosen and used to check if a data block has been transmitted. The combined "silence" parameter $\alpha$ is thus re-defined as:

$$\alpha = \frac{\sum_{i=1}^{N} P_n^i}{\sum_{i=1}^{N} P_u^i}$$

$$(3)$$

where the symbols have the same meaning indicated in the foregoing.

If, during the last B-N bursts, $\alpha > \alpha_{max}$ (i.e. the data block has not been transmitted), reception is discontinued. Larger values of N ensure a reliable estimate of silence parameter $\alpha$, but also reduce the time period with halted reception.

As already indicated for the case without DRX, when the transport channel used adopts a diagonal interleaving scheme, the value of the number of bursts B is set to the half number of bursts exploited in the transmission of a data block.

In the following, the optimization is described of the threshold value $\alpha_{max}$ for application in a TSM system, showing the advantages in the choice of orthogonal sequences to evaluate the training sequence power Pn and noise and interference power Pu and the overall error rates related to the choice of the threshold value $\alpha_{max}$.

In TSM systems the main application of DTX technique is for speech channels. A detailed description of the DTX feature for Enhanced Full Rate (EFR) and Half Rate (HR) speech channels is provided in TSM 06.81 Discontinuous Transmission (DTX) for Enhanced Full Rate (EFR) speech traffic channel and TSM 06.41 "Discontinuous Transmission (DTX) for Half Rate speech traffic channel" respectively.

In order to best comply with those standards, the solution exemplified herein includes the following features:

- the start of a silent period is signalled by a special frame (SID frame) while the transmission is resumed with a normal speech frame,
- the number of bursts (radio frames) used to transmit a speech frame (data block) is set equal to 8,
- both EFR and HR transport channels adopt diagonal interleaving, and
- the training sequences are given by cyclic rotations of basic midamble codes and preferably have a length of 144 chips.

Due to the use of diagonal interleaving, the number of bursts that are available for the evaluation of the silence parameter $\alpha$ is equal to 4 (B = 8/2 = 4).

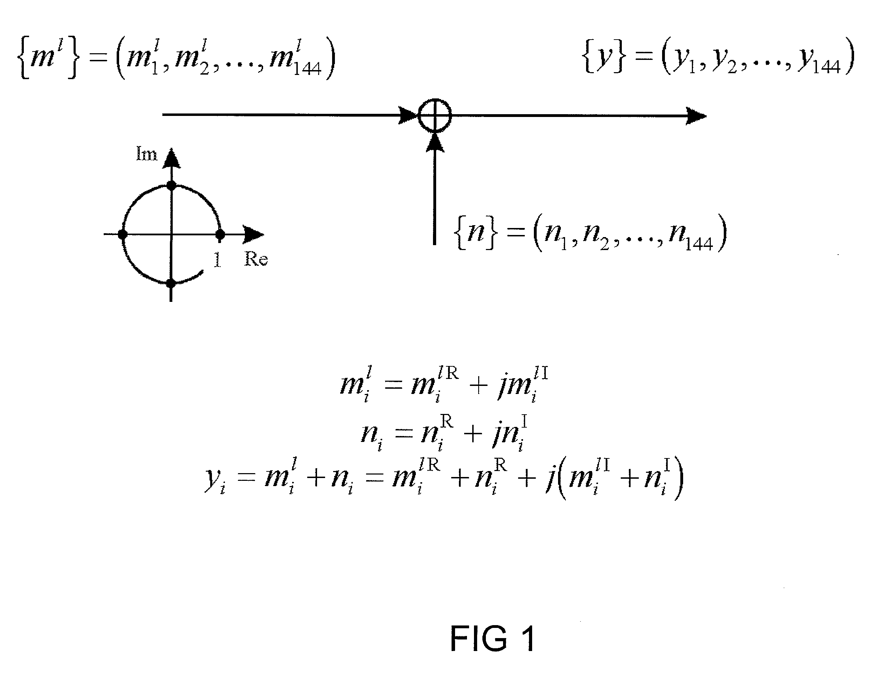

A system model useful in evaluating performance of the solution described herein and optimizing the value of $\alpha_{max}$ is depicted in Figure 1. There, {ml} represents a transmitted midamble (with QPSK symbols), {n} is a vector of independent Gaussian distributed random variables with standard deviation σ which models the thermal noise and interference and, finally, {y} is the received signal.

The estimate of training sequence power $P_u$ and noise and interference power $P_n$ is performed by correlation of the received signal {y} with the expected midamble sequence and the midamble selected to evaluate the noise power Pn, respectively.

In order to evaluate the two possible type of errors that can occur, as described above, the midamble sequence {ml} is selected as follows:

- in the detection of rejected frames error rate ($\alpha > \alpha_{max}$ while a speech frame is transmitted) {ml} corresponds to the expected transmitted midamble sequence;
- in the detection of accepted invalid frames (i.e. noise bursts) error rate ($\alpha < \alpha_{max}$ while no speech frame is transmitted) {ml} corresponds to a different rotation of the expected basic midamble code (i.e. another user in the same cell is supposed to transmit in the time slot) or is a null sequence (i.e. no user is supposed to transmit in the same time slot).

A full evaluation was performed in the case of DTX without the use of DRX, i.e. exploiting four radio frames in the estimate of silence parameter $\alpha$.

All possible cases were considered where the optimized values for threshold value $\alpha_{max}$ are listed together with the corresponding method performance.

Performance, i.e. the error rate, of the solution exemplified herein is evaluated in terms of rejected valid frames, the percentage of transmitted frames that are rejected, and accepted invalid frames, the percentage of accepted frames among the ensemble of not transmitted ones.

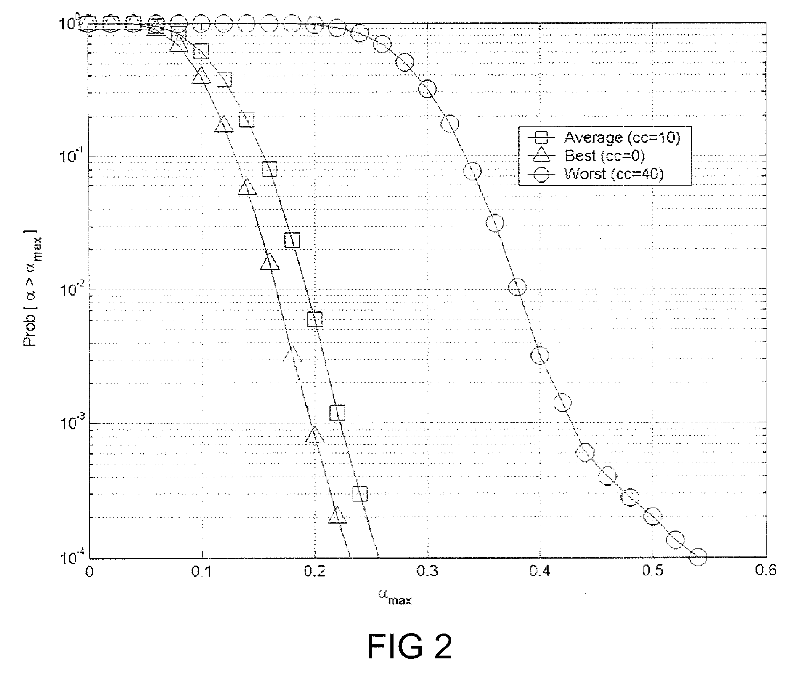

The rejected valid frames error rate is reported in Figure 2 for $\sigma = 2$ (C/I = -6 dB) as a function of threshold value $\alpha_{max.}$

The parameter CC in Figure 2 represents the cross correlation between the expected midamble code {ml} and the one exploited to evaluate $P_n$: CC=0 corresponds to orthogonal midambles, CC=10 and CC=40 are respectively the average and worst cases evaluated among the set of 128 midamble codes defined in the standard.

As expected, the use of orthogonal midambles leads to an error rate reduction to a large extent.

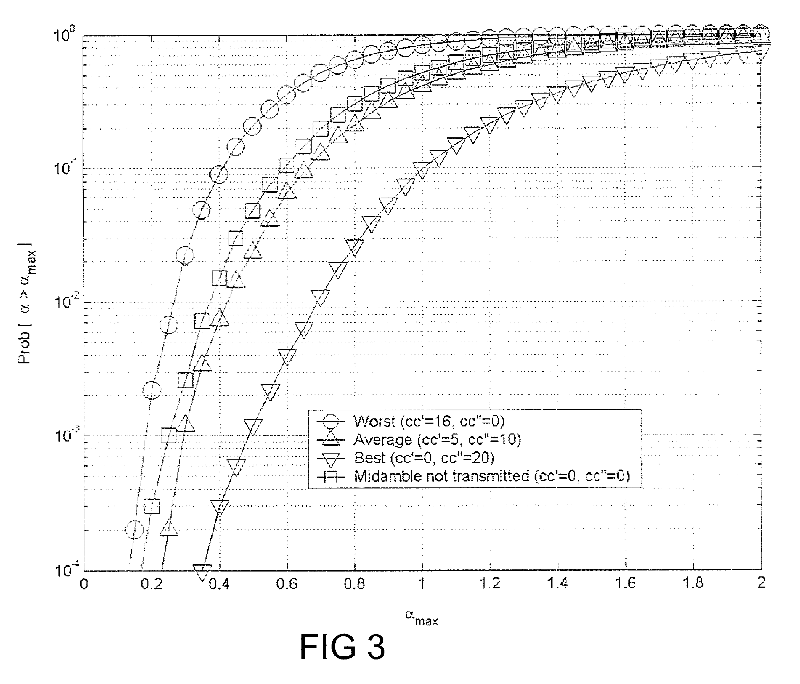

The accepted invalid frames error rate is reported in Figure 3 where the percentage of accepted frames among the ensemble of not transmitted ones is plotted as a function of the threshold value $\alpha_{max}$ for $\sigma = 2$ (C/I = -6 dB).

The parameters CC' represents the cross correlation between the expected midamble and the interfering one ({ml}), while CC" represents the correlation between the midamble used to evaluate Pn and {ml}.

The graph in Figure 3 shows that the method allows to discard a larger percentage of invalid frames as much as the threshold value $\alpha_{max}$ results small. On the other hand small values of the threshold value $\alpha_{max}$ increase the number of valid discarded frames. The best threshold value $\alpha_{max}$ is the smallest value that guarantees a negligible loss of valid frames.

By setting that threshold at $10^{-4}$, the best values for the threshold value $\alpha_{max}$, resulting from Figure 2 are about 0.25 and 0.55 if orthogonal (best case) or random midambles (worst case) are respectively selected.

Finally, the average percentage of accepted invalid frames is obtained from graph in Figure 3 being about $4 \cdot 10^{-2}$ for $\alpha_{max} = 0.55$ and $5 \cdot 10^{-4}$ for $\alpha_{max} = 0.25$. This gap represents the benefit in the use of orthogonal midambles.

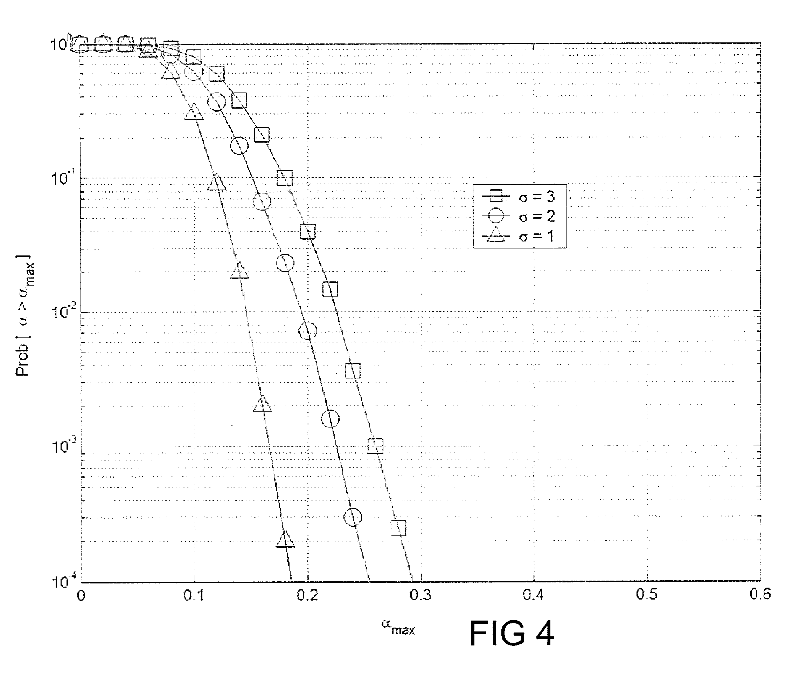

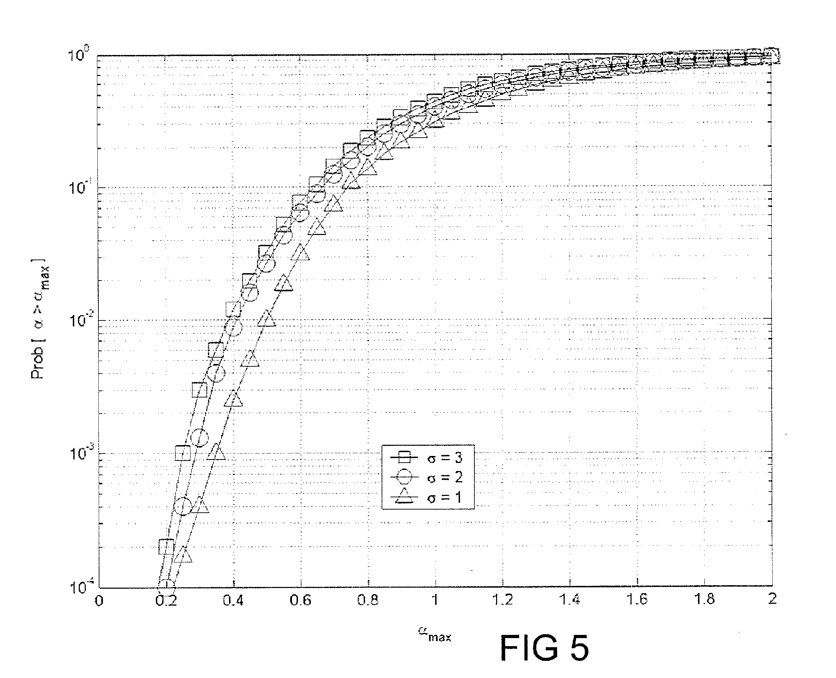

In Figures 4 and 5 the same analysis are performed at $\sigma = 1$, 2 and 3 (C/I = 0, -6 and -9.5 dB) in the average cases of cross correlation, showing that the method performs well also in very noisy channel conditions.

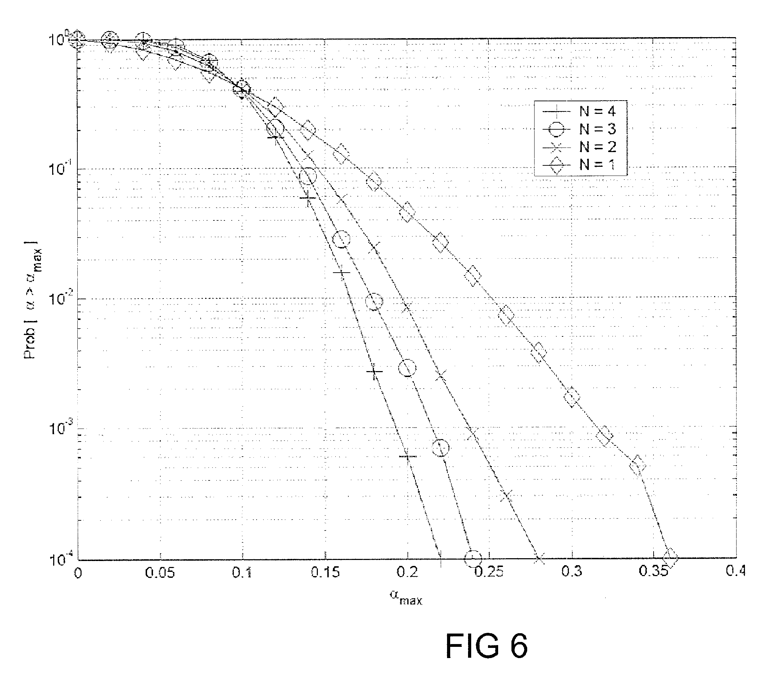

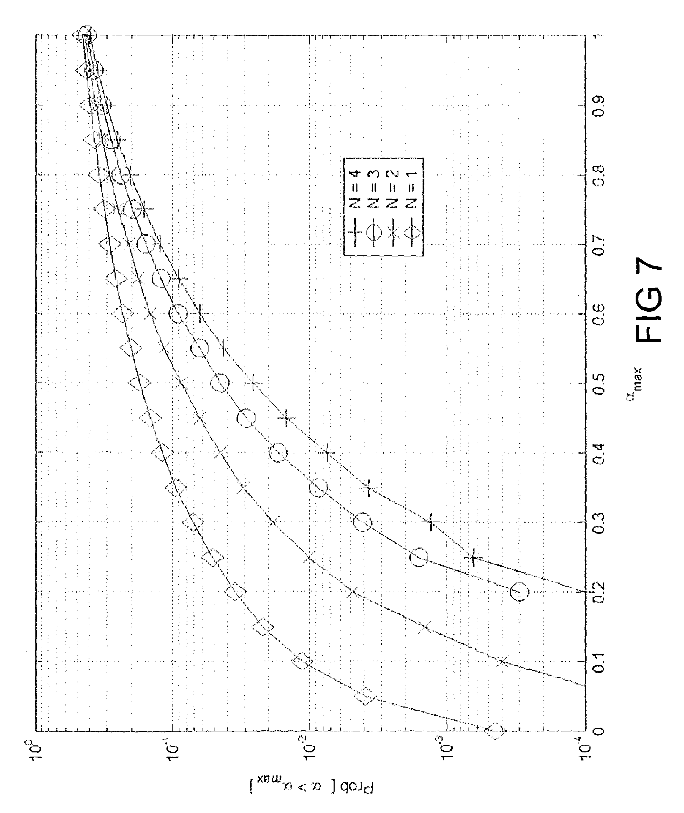

Table 2 hereinafter reports the optimum values for the threshold value $\alpha_{max}$, as obtained for arrangements with no DRX and with DRX with one, two or three free radio frames (RF) , respectively. These results were obtained by means of the statistical analysis described above. The results are plotted in Figures 6 and 7.

The following **Table 2** shows optimized $\alpha_{max}$ values and performance results.

| | B | N | $\alpha_{max}$ | Rate of rejected valid frames | Rate of accepted invalid frames |
|---|---|---|---|---|---|
| No DRX | 4 | 4 | 0.25 | < $10^{-4}$ | $5 \cdot 10^{-4}$ |
| DRX with 1 free RF | 4 | 3 | 0.25 | < $10^{-4}$ | $2 \cdot 10^{-3}$ |
| DRX with 2 free RF | 4 | 2 | 0.3 | < $10^{-4}$ | $2 \cdot 10^{-2}$ |
| DRX with 3 free RF | 4 | 1 | 0.4 | < $10^{-4}$ | $10^{-1}$ |

As reported in said **Table 2,** the optimum values for $\alpha_{max}$ are related to the parameter N (number of radio bursts used to estimate $\alpha$) ranging from 0.25 to 0.4. The corresponding accepted invalid frames error rate, ranges from $5 \cdot 10^{-4}$ to $10^{-1}$. Interestingly, the final rate of erroneously accepted speech blocks is obtained by multiplying the accepted invalid frames error rate by $2^{-p}$, where p (number of parity bits) is equal to 8 in TSM EFR and HR speech channels.

Detecting a silent period in a receiver for cellular digital telecommunications system allows for an efficient rejection of not transmitted burst widely reducing the error rate that results applying the parity check criterion only. Detection of such a silent period in a receiver for cellular digital telecommunications system allows for suspension of reception, also called Discontinuous Reception technique (DRX), when "not transmitted" data blocks are detected. Detection of a silent period as exemplified herein, in a receiver for cellular digital telecommunications system, can be advantageously applied to digital communication systems making use of a time division access technique where a training sequence is present in the time slot burst format.

The solution exemplified herein is suited for TD-SCDMA in its two standard variants, TSM (TD-SCDMA System for Mobile) and TDD-LCR (TDD Low Chip Rate), where the training sequence corresponds to the midamble code transmitted within each burst. The application to GSM, or to other standards with time division access, only requires minor changes in order to match the method to the new frame format and training sequences.

The solution described herein is adapted to be implemented in the form of dedicated hardware or processor architecture, implementation of such architecture on the basis of the present disclosure involving the application of the ordinary design capability of those of skill in the art.

Alternatively, the solution described herein is adapted to be implemented by programming a general purpose processor architecture such as a digital signal processor or DSP by means of a suitable computer program product. Again, suitably programming a general purpose processor architecture on the basis of the present disclosure falls within the ordinary programming capability of those of skill in the art.

It is thus obvious that many changes of the exemplary embodiment shown herein are evident for the man skilled in the art, without departing from the scope of the invention as defined by the claims that follow.

**Claims**

1. A method for detecting transmitted bursts in a telecommunication system wherein data blocks are transmitted in bursts and training sequences are transmitted in association with said data blocks, operation of the system being affected by signal impairment sources, **characterized in that** it includes the steps of:

   - determining a first power level parameter ($P_u$) indicative of the power associated to a received training sequence,
   - determining a second power level parameter indicative of power associated to said impairment sources ($P_n$),
   - combining said first ($P_u$) and second ($P_n$) power level parameters to generate a combined power parameter ($\alpha$),
   - defining at least one threshold value ($\alpha_{max}$) for said combined power parameter ($\alpha$),
   - comparing said combined power parameter ($\alpha$) against said at least one threshold value ($\alpha_{max}$) to obtain either of a first and a second comparison result, whereby transmitted bursts are detected in the case of said first comparison result ($\alpha<\alpha_{max}$) and no transmitted bursts are detected in the case of said second comparison result ($\alpha>\alpha_{max}$).

2. The method of claim 1, **characterized in that** it includes the steps of:

   - generating said combined power parameter ($\alpha$) as the ratio of said second power level parameter ($P_n$) to said first power level parameter ($P_u$),
   - detecting transmitted bursts in the case said combined power parameter ($\alpha$) is lower ($\alpha<\alpha_{max}$) than said at least one threshold value, and
   - detecting no transmitted bursts in the case said combined power parameter ($\alpha$) is higher ($\alpha>\alpha_{max}$) than said at least one threshold value.

3. The method of either of claims 1 or 2, **characterized in that** determining said first ($P_n$) and second ($P_u$) power level parameters includes at least one of:

   - correlating a received signal with a detected training sequence power ($P_u$) and impairment source power ($P_n$);
   - rake receiver processing exploiting a detected training sequence power ($P_u$) and impairment source power ($P_n$); and
   - joint detection exploiting detected training sequence power ($P_u$) and impairment source power ($P_n$).

4. The method of claim 3, for use in cellular system including cells each having associated a midamble code, **characterized in that** it includes the steps of obtaining a sequence orthogonal to said training sequence from the midamble code associated to a respective cell.

5. The method of any of the previous claims, **characterized in that** it includes the steps of:

   - selecting a number (B) of bursts used in the transmission of a data block,
   - determining said first power level parameter ($P_n$) as the sum of power levels associated with said impairment sources over said number of bursts ($\Sigma P_n^i$)
   - determining said second power level parameter ($P_u$) as the sum of power levels associated to a received training sequence over said number of bursts ($\Sigma P_u^i$).

6. The method of any of previous claim 1 to 4, **characterized in that** it includes the steps of:

   - selecting a first number (B) of bursts used in the transmission of a data block,
   - selecting a second number (N) of bursts between 1 and said first number (B),

- determining said first power level parameter ($P_n$) as the sum of power levels associated with said impairment sources over said second number (N) of bursts ($\Sigma P_n^i$)
- determining said second power level parameter ($P_u$) as the sum of power levels associated to a received training sequence over said second number (N) of bursts ($\Sigma P_u^i$),
- comparing said combined power parameter ($\alpha$) against said at least one threshold value ($\alpha_{max}$), and
- discontinuing reception of said bursts over the remaining bursts (B-N) between said first (B) and said second (N) number in the case of said second comparison result ($\alpha > \alpha_{max}$).

7. The method of either of claims 5 or 6, applied to a system wherein a diagonal interleaving scheme is used in a transport channel, **characterized in that** it includes the step of setting the number (B) of bursts used in the transmission of a data block at a value equal to the half number of bursts exploited in the transmission of a data block in said diagonal interleaving scheme.

8. The method of any of the previous claims, applied to a TSM system where data blocks are transmitted on speech channels and where the start of a silent period is signalled by a respective data block (SID) while transmission is resumed with a normal speech datablock, **characterised in that** in includes at least one of the steps of:

   - selecting the number of bursts used to transmit a speech data block is equal to 8,
   - adopting diagonal interleaving on he transport channel,
   - generating the training sequences by cyclic rotations of basic midamble codes, preferably with a length of 144 chips.

9. The method of any of the previous claims, **characterized in that** it includes the steps of arranging said data blocks in frames and defining said at least one threshold value ($\alpha_{max}$) for said combined power parameter ($\alpha$) by evaluating an error rate in terms of:

   - rejected valid frames as a percentage of transmitted frames that are rejected, and
   - accepted invalid frames as a percentage of rejected frames among the ensemble of not transmitted ones.

10. A receiver for detecting transmitted bursts in a telecommunication system wherein data blocks are transmitted in bursts and training sequences are transmitted in association with said data blocks, operation of the system being affected by signal impairment sources, **characterized in that** said receiver is arranged for:

    - determining a first power level parameter ($P_u$) indicative of the power associated to a received training sequence,
    - determining a second power level parameter indicative of power associated to said impairment sources ($P_n$),
    - combining said first ($P_u$) and second ($P_n$) power level parameters to generate a combined power parameter ($\alpha$), said combined power parameter ($\alpha$) admitting at least one threshold value ($\alpha_{max}$),
    - comparing said combined power parameter ($\alpha$) against said at least one threshold value ($\alpha_{max}$) to obtain either of a first and a second comparison result, whereby transmitted bursts are detected in the case of said first comparison result ($\alpha < \alpha_{max}$) and no transmitted bursts are detected in the case of said second comparison result ($\alpha > \alpha_{max}$).

11. The receiver of claim 10, **characterized in that** it is arranged for:

    - generating said combined power parameter ($\alpha$) as the ratio of said second power level parameter ($P_n$) to said first power level parameter ($P_u$),
    - detecting transmitted bursts in the case said combined power parameter ($\alpha$) is lower ($\alpha < \alpha_{max}$) than said at least one threshold value, and
    - detecting no transmitted bursts in the case said combined power parameter ($\alpha$) is higher ($\alpha > \alpha_{max}$) than said at least one threshold value.

12. The receiver of either of claims 10 or 11, **characterized in that** it includes, for determining said first ($P_n$) and second ($P_u$) power level parameters, at least one of:

    - a correlator for correlating a received signal with a detected training sequence power ($P_u$) and impairment source power ($P_n$);
    - a rake receiver exploiting a detected training sequence power ($P_u$) and impairment source power ($P_n$); and

-  a joint detector exploiting detected training sequence power ($P_u$) and impairment source power ($P_n$).

**13.** The receiver of claim 12, for use in cellular system including cells each having associated a midamble code, **characterized in that** the receiver is arranged for obtaining a sequence orthogonal to said training sequence from the midamble code associated to a respective cell for evaluating the impairment source power ($P_n$).

**14.** The receiver of any of the previous claims 10 to 13, **characterized in that** the receiver is arranged for:

-  selecting a number (B) of bursts used in the reception of a data block,
-  determining said first power level parameter ($P_n$) as the sum of power levels associated with said impairment sources over said number of bursts ($\Sigma P_n^i$), and
-  determining said second power level parameter ($P_u$) as the sum of power levels associated to a received training sequence over said number of bursts ($\Sigma P_u i$).

**15.** The receiver of any of previous claims 10 to 14, **characterized in that** the receiver is arranged for:

-  selecting a first number (B) of bursts used in the transmission of a data block,
-  selecting a second number (N) of bursts between 1 and said first number (B),
-  determining said first power level parameter ($P_n$) as the sum of power levels associated with said impairment sources over said second number (N) of bursts ($\Sigma P_n^i$),
-  determining said second power level parameter ($P_u$) as the sum of power levels associated to a received training sequence over said second number (N) of bursts ($\Sigma P_u^i$),
-  comparing said combined power parameter ($\alpha$) against said at least one threshold value ($\alpha_{max}$), and
-  discontinuing reception of said bursts over the remaining bursts (B-N) between said first (B) and said second (N) number in the case of said second comparison result ($\alpha > \alpha_{max}$).

**16.** The receiver of any of the previous claims 10 to 15 for use in a system where data blocks are transmitted on speech channels and where the start of a silent period is signalled by a respective data block (SID) while transmission is resumed with a normal speech data block, **characterised in that**:

-  the number of bursts used to transmit a speech data block is equal to 8,
-  diagonal interleaving is adopted on the transport channel,
-  the training sequences are cyclic rotations of basic midamble codes, preferably with a length of 144 chips.

**17.** The receiver of any of the previous claims 10 to 16, **characterized in that** the receiver is arranged for receiving said data blocks in frames and defining said at least one threshold value ($\alpha_{max}$) for said combined power parameter ($\alpha$) by evaluating an error rate in terms of:

-  rejected valid frames as a percentage of transmitted frames that are rejected, and
-  accepted invalid frames as a percentage of rejected frames among the ensemble of not transmitted ones.

**18.** A computer program product directly loadable into the memory of a digital computer and comprising software code portions for performing the steps of the method of any of clisms 1 to 9 when said product is run on a computer.

$$\{m^l\} = \left(m_1^l, m_2^l, \ldots, m_{144}^l\right) \qquad \{y\} = \left(y_1, y_2, \ldots, y_{144}\right)$$

$$\{n\} = \left(n_1, n_2, \ldots, n_{144}\right)$$

$$m_i^l = m_i^{l\mathrm{R}} + j m_i^{l\mathrm{I}}$$

$$n_i = n_i^{\mathrm{R}} + j n_i^{\mathrm{I}}$$

$$y_i = m_i^l + n_i = m_i^{l\mathrm{R}} + n_i^{\mathrm{R}} + j\left(m_i^{l\mathrm{I}} + n_i^{\mathrm{I}}\right)$$

## FIG 1

FIG 2

FIG 3

FIG 4

FIG 5

17

FIG 6

FIG 7

**European Patent Office**

## EUROPEAN SEARCH REPORT

Application Number

EP 02 42 5741

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 370 392 B1 (LI JUN ET AL) 9 April 2002 (2002-04-09) * abstract * * column 1, line 55 - column 2, line 16 * * column 2, line 47 - column 3, line 25 * --- | 1,10,18 | H04B17/00 H04B7/005 |
| A | US 5 835 889 A (KAPANEN PEKKA) 10 November 1998 (1998-11-10) * abstract * * column 9, line 27 - column 10, line 4 * --- | 1,10,18 | |
| A | EP 1 039 657 A (CIT ALCATEL) 27 September 2000 (2000-09-27) * abstract * * paragraphs [0003],[0006],[0007],[0009]-[0011] * --- | 1,10,18 | |
| A | US 6 400 960 B1 (DOMINIQUE FRANCIS ET AL) 4 June 2002 (2002-06-04) * abstract * * column 3, line 64 - column 4, line 20 * ----- | 1,10,18 | TECHNICAL FIELDS SEARCHED (Int.Cl.7) H04B H04Q |

The present search report has been drawn up for all claims

| Place of search | Date of completion of the search | Examiner |
|---|---|---|
| THE HAGUE | 23 April 2003 | Lustrini, D |

EPO FORM 1503 03.82 (P04C01)

## ANNEX TO THE EUROPEAN SEARCH REPORT
## ON EUROPEAN PATENT APPLICATION NO.

EP 02 42 5741

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2003

| Patent document cited in search report | | Publication date | Patent family member(s) | | Publication date |
|---|---|---|---|---|---|
| US 6370392 | B1 | 09-04-2002 | NONE | | |
| US 5835889 | A | 10-11-1998 | FI | 953252 A | 31-12-1996 |
| | | | AT | 405346 B | 26-07-1999 |
| | | | AT | 93596 A | 15-11-1998 |
| | | | AU | 701220 B2 | 21-01-1999 |
| | | | AU | 6226096 A | 05-02-1997 |
| | | | BR | 9608734 A | 06-07-1999 |
| | | | CA | 2222501 A1 | 23-01-1997 |
| | | | DE | 19617630 A1 | 02-01-1997 |
| | | | ES | 2114820 A1 | 01-06-1998 |
| | | | WO | 9702561 A1 | 23-01-1997 |
| | | | FR | 2736186 A1 | 03-01-1997 |
| | | | GB | 2303034 A ,B | 05-02-1997 |
| | | | IT | MI961200 A1 | 12-12-1997 |
| | | | JP | 11514168 T | 30-11-1999 |
| | | | RU | 2158446 C2 | 27-10-2000 |
| | | | SE | 518907 C2 | 03-12-2002 |
| | | | SE | 9602230 A | 31-12-1996 |
| EP 1039657 | A | 27-09-2000 | EP | 1039657 A1 | 27-09-2000 |
| | | | CN | 1268008 A | 27-09-2000 |
| | | | JP | 2000315977 A | 14-11-2000 |
| US 6400960 | B1 | 04-06-2002 | NONE | | |

EPO FORM P0459

For more details about this annex : see Official Journal of the European Patent Office, No. 12/82